# EUROPÄISCHE PATENTSCHRIFT

(11) **EP 0 673 444 B1**
(45) Veröffentlichungstag und Bekanntmachung des Hinweises auf die Patenterteilung: **11.12.1996**
(21) Anmeldenummer: 93923445.6
(22) Anmeldetag: 22.10.1993
(51) Int. Cl.: C23C 2/24, H02K 44/06

(54) **VERFAHREN UND VORRICHTUNG ZUM BESCHICHTEN DER OBERFLÄCHE VON STRANGFÖRMIGEM GUT**
PROCESS AND DEVICE FOR COATING THE SURFACE OF STRIP MATERIAL
PROCEDE ET DISPOSITIF PERMETTANT DE RECOUVRIR LA SURFACE D'UN PRODUIT EN BANDE

(30) Priorität: 08.12.1992 DE 4242380
(43) Veröffentlichungstag der Anmeldung: 27.09.1995
(73) Patentinhaber: MANNESMANN Aktiengesellschaft, 40213 Düsseldorf (DE)
(72) Erfinder: FROMMANN, Klaus, Dr.-Ing., D-40667 Meerbusch (DE); OTTERSBACH, Walter, Dipl.-Ing., D-47249 Duisburg (DE); HAUPT, Werner, Dipl.-Ing., D-47239 Duisburg (DE); PARAMONOV, Vladimir A., Moskau, 107005 (RU); TYCHININ, Anatolij T., Moskau, 107005 (RU); MOROZ, Anatolij T., Moskau, 107005 (RU); BIRGER, Boris L., Riga (LV); FOLIFOROW, Vladimir M., Riga (LV)
(74) Vertreter: Meissner, Peter E., Dipl.-Ing.
(86) Internationale Anmeldenummer: DE9301022
(87) Internationale Veröffentlichungsnummer: WO9413850

(56) Entgegenhaltungen:
- FR-A- 2 237 975
- FR-A- 2 647 814
- PATENT ABSTRACTS OF JAPAN vol. 15, no. 72 (C-0808)20. Februar 1991 & JP,A,02 298 247 (NIPPON STEEL) 10. Dezember 1990
- PATENT ABSTRACTS OF JAPAN vol. 15, no. 248 (C-0843)25. Juni 1991 & JP,A,03 079 747 (KOBE STEEL) 4. April 1991

## Beschreibung

Die Erfindung betrifft ein Verfahren und eine Vorrichtung zur Durchführung des Verfahrens zum Beschichten der Oberfläche von strangförmigem Gut, insbesondere NE-Metall- und Stahlband mit metallischem Überzug, bei der das Gut ohne Richtungsumkehr durch einen das geschmolzene Überzugsmaterial aufnehmenden Behälter hindurchgeführt wird, der unterhalb des Schmelzbadspiegels einen Durchführkanal aufweist, in dem durch ein elektromagnetisches Wanderfeld im Überzugsmaterial Induktionsströme induziert werden, die in Wechselwirkung mit dem elektromagnetischen Wanderfeld eine elektromagnetische Kraft zum Zurückhalten des Überzugsmaterials hervorrufen.

Aus "Patent Abstracts of Japan, Band 15, Nr. 72, C-0808, 20.02.1991" sowie der korrespondierenden JP-A-2-298247 ist ein Verfahren und eine Vorrichtung zum kontinuierlichen Beschichten von Stranggut aus der Schmelze bekannt, bei dem das Schmelzbad einen Zufuhrkanal für das Stranggut aufweist, durch den das Stranggut von unten nach oben durch die Schmelze geführt und beschichtet wird. Um ein Auslaufen der Schmelze durch den Einführstutzen zu verhindern, wird durch eine elektromagnetische Pumpe eine Gegenkraft zur auf die Schmelze wirkenden Gravitationskraft erzeugt. Eine zusätzliche Spule unterhalb der elektromagnetischen Pumpe wirkt ergänzend als elektromagnetischer Verschluß und gleicht von außen wirkende Turbulenzen aus.

Ein solches Verfahren und eine solche Vorrichtung ist aus dem SU-Autorenschein 1 157 125 zur Beschichtung von durchlaufenden Bändern bekannt geworden. Um zu verhindern, daß das schmelzflüssige Überzugsmaterial durch den an der Unterseite des Behälters angeordneten Durchführkanal ausfäuft, wird das Prinzip einer Induktionspumpe angewendet. In solchen Pumpen zum Fördern von flüssigem Metall werden die durch Induktionswirkung erzeugten kräfte benutzt, um das Metall mit dem Feld in Bewegung zu setzen und den nötigen Druck der Pumpe herbeizuführen. Bringt man eine derartige Induktionspumpe unterhalb des Badbehälters an und sorgt dafür, daß der im Kanal durch die Induktionspumpe erzeugte Druck dem Hydrostatischen Druck des schmelzflüssigen Überzugsmaterials entspricht, so kann man verhindern, daß das Überzugsmaterial ausläuft. Dazu wird der Induktor in der Welse geschaltet, daß das Wanderfeld sich auf den Behälterboden zubewegt, wodurch man den rücktreibenden Effekt erhält.

Durch wechselwirkung des Magnetfeldes mit den im flüssigen Überzugsmaterial induzierten Strömen treten die elektromagnetischen kräfte in der gesamten Länge des Kanals innerhalb des Bereichs der Induktoren auf. Infolge der Addition der elektromagnetischen kräfte, die in jeden Querschnitt Längs des kanals wirken, wächst der durch diese kräfte entstehende Druck längs des kanals in Richtung des Behälterbodens an. Theoretisch muß eine Verninderung des Ausfließens durch den kanal auf einer Länger erfolgen, bei welcher der durch die Pumpenwirkung der Induktionspumpe entwickelte Druck gleich dem hydrostatischen Druck im Behälter ist.

Es hat sich aber in der Praxis gezeigt, daß die elektromagnetische wirkung im Durchführkanal nach einem komplizierten Schema abläuft, denn es ist zu berücksichtigen, daß es sich beim Überzugsmaterial um eine Flüssigkeit handelt, deren Schichten sich gegeneinander verschieben. Besonders in flachen Dreiten Durchführkanälen, wie man sie zum Hindurchführen von bandförmigen Material benotigt, sind die elektromagnetischen Kräfte ungleichmäßig im Kanalquerschnitt verteilt und können bis auf den Wert Nutt an den Enden abfallen, wenn man die Induktoren nicht entsprechend so auslegt, daß eine möglichst gleichmäßige Verteilung der Kräfte erzielt wird.

In jedem Fall macnt sich im Auslaufbereich des Behälters im Durchlaufkanal diese ungleiche Verteilung der magnetischen Kräfte dadurch bemerkbar, daß Wirbel dergestalt entstehen, daß sich das Überzugsmaterial in der Mitte des kanals in Richtung des Wanderfeldes und im Seitenbereich unter dem Einfluß des gleichmäßigen hydrostatischen Druckes aus dem Überzugsmaterial in entgegengesetzter Richtung bewegt. Durch die hohe Strömungsgeschwindigkeit ist der kanal erhöhtem Verschleiß ausgesetzt.

Ziel der vorliegenden Erfindung ist es, unter Ausschaltung der vorgezeigten Mängel ein Verfahren und eine Vorrichtung der gattungsgemäßen Art zu schatfen, mit dem bzw, mit der eine Beruhigung der Schmelze im Durchführkanal und auch im Behälter erreicht wird und mit dem eine Ausbalancierung zwischen hydrostatischen und elektromagnetischen Kräften weitgehend erreicht wird.

Zür Lösung der Aufgabe wird erfindungsgemäß ein Verfahren vorgeschlagen, daß dadurch gekennzeichnet ist, daß dem Wanderfeld im behälternanen Bereich ein konstantes Gleich- oder Wechselstromfeld überlagert wird, welches die Bewegung im überzugsmaterial dämpft. Indem man dem Wanderfeld ein konstantfeld entgegenrichtet, werden die elektromagnetischen Kräfte insbesondere im Bereich des behälterseitigen Eingangs des Durchführkanales gedämpft, so daß die ungleichen Kräfte an dieser Stelle homogenisiert werden.

Eine Vorrichtung zur Durchführung des Verfahrens mit beidseitig des Durchführkanals im Überzugsmaterial Induktionsströme erzeugenden Drenstrominduktoren, die aus Eisenkernpaketen mit in quer zum Durchführkanal verlaufenden Nuten verlegten Wicklungen bestehen wird dadurch erfindungsgemäß verbessert, daß oberhalb dieser Induktoren beidseitig des Durchführungskanals je ein weiterer Eisenkern angeordnet ist, der mit parallel zu den Induktorwicklungen verlaufenden, mit Gleich- oder Wechselstrom beaufschlagbaren Wicklungen bestückt ist. Mit diesen zusätzlichen Wicklungen kann dem Wanderfeld das verfahrensgemäß vorgeschlagene konstantfeld überlagert werden, das zur Beruhigung des Überzugsmaterials in diesem Bereich beiträgt.

Nach einem weiteren Merkmal der Erfindung ist vorgesehen, daß die Eisenkerne der mit Gleich- oder Wechselstrom beaufschlagbaren Wicklungen L-förmig gestaltet sind, wobei jeweils ein Schenkel stirnseitig an dem Eisenkern des Induktors anliegt und der jeweils andere Schenkel stirnseitig zum Zuführkanal gerichtet ist. Durch die L-förmig gestalteten, rechtwinklig abgeknickten Eisenkerne wird das Magnetfeld der zusätzlichen Wicklung in die Wirkrichtung geleitet, in der den aus dem Wanderfeld resultierenden elektromagnetischen Kräfte entsprechende Gegenkräfte wirksam werden.

Nach einem anderen günstigen Merkmal der Erfindung ist vorgesehen, daß die dem Durchführkanal zugewandten Schenkel des L-förmigen Eisenkerns in der Mitte weiter vom Durchführkanal beabstandet sind, als an den Seiten. Dadurch wird der ungleichförmigen kraftverteilung der elektromagnetischen Kräfte im Durchführkanal Rechnung getragen. So kann beispielsweise an den Seiten des Durchführkanals der Abstand der Stirnseiten der Schenkel nur 10 % des Abstandes von der kanalmitte betragen. Der übergang ist kontinuierlich.

Mit der Erfindung kann nicht nur die Standzeit des Metallkanales verlängert werden, auch wird die Gefahr der Oxidierung im Überzugsmaterial verringert und die Beschichtungsqualität wird verbessert.

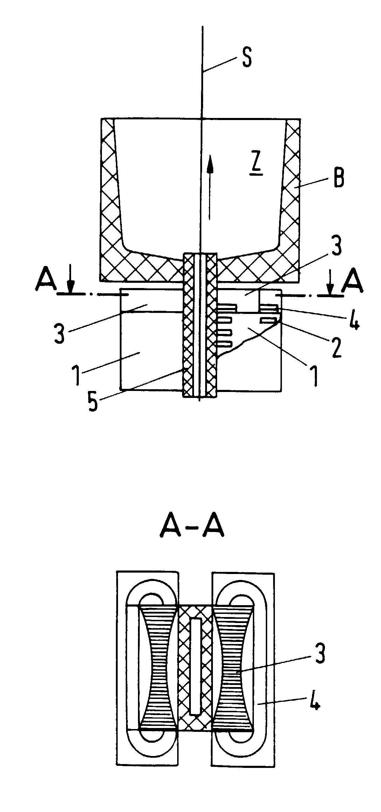

Ein Ausführungbeispiel der Erfindung ist in der Zeichnung dargestellt und wird nachfolgend beschrieben:

In einem feuerfesten Behälter B ist schmelzflüssiges Überzugsmaterial Z, beispielsweise Zink, enthalten. Durch einen im Boden des Behälters B vorgesehenen Durchführkanal 5 aus keramischem Werkstoff ist von unten nach oben das zu beschichtende Gut, beispielsweise als Stahlband S geleitet.

Der aus dem Boden des Behälters B nach unten herausragende Durchführkanal 5 weist beidseitig Induktoren auf, die aus Eisenpaketen 1 mit in Nuten verlegten Wicklungen 2 bestehen. Diese Wicklungen 2 werden mit Drehstrom beaufschlagt, wodurch in den Induktoren ein Wanderfeld erzeugt wird, dessen in Wechselwirkung mit dem elektromagnetischen Wanderfeld entstehenden elektromagnetische Kräfte nach oben gerichtet sind. Dadurch wird das Überzugsmaterial Z am Ausfließen aus dem Durchführungskanal 5 gehindert, wenn die elektromagnetischen Krafte im Gleichgewicht mit den hydrostatischen kräften aus dem Überzugsmaterial Z stehen.

Das in den Induktoren erzeugte Wanderfield verursacht, weil es über die Breite des Kanals ungleichförmig ist, im bodennahen Bereich des Durchführkanales Wirbel, die zu einer Durchwirbelung des Überzugsmaterials in diesem Bereich und im Behälter B führen. Um dies zu verhindern, sind zusätzlich zum Eisenkern 1 der Induktoren weitere Eisenkerne 3 zwiscnen Behälter B und den Induktoren vorgesehen, die gleichfalls mit einer Wicklung 4 bestückt sind. Diese Wicklung wird jedoch mit Gleich- oder Wechselstrom beaufschlagt, so daß ein konstantes elektromagnetisches Feld entstent, welches den aus dem Wanderfeld entstehenden elektromagnetisches Kräften entgegengerichtete Kräfte erzeugt. Dadurch wird im oberen Bereich des Durchführkanals 5 die Durchwirbelung im überzugsmaterial gedämpft, die Bewegung des Bades wird weitgehend beruhigt.

Aus der Zeichnungsfigur ist erkennbar, daß die Eisenkerne 3 der zusätzlichen Wicklungen L-förmig ausgebildet sind, wobei der längere Schenkel am Durchführkanal 5 und der kürzere Schenkel am Eisenkern des Induktors anliegt.

Wie im Querschnitt durch die Zeichnungsfigur erkennbar ist, ist der mittlere Bereich der Stirnseite des L-förmigen Schenkels weiter von der Außenwand des Durchführkanales entfernt, als die Seiten. Dadurch wird die ungleichmäßige Verteilung der elektromagnetischen Kräfte aus dem Wanderfeld berücksichtigt und die vergleichmäßigende Wirkung auf das überzugsmaterial erreicht.

## Patentansprüche

1. Verfahren zum Beschichten der Oberfläche von strangförmigen Gut, insbesondere NE-Metall- und Stahlband mit metallischem Überzug, bei dem das Gut ohne Richtungsumkehr durch einen das geschmolzene Überzugsmaterial aufnehmenden Behälter hindurchgeführt wird, der unterhalb des Schmelzbadspiegels einen Durchführkanal aufweist, in den durch ein elektromagnetisches Wanderfeld im Überzugsmaterial Induktionsströme induziert werden, die in Wechselwirkung mit dem elektromagnetischen Wanderfeld eine elektromagnetische Kraft zum Zurückhalten des Überzugsmaterials hervorrufen,
dadurch gekennzeichnet,
daß dem Wanderfeld im oberen behälternahen Bereich des Durchführkanals ein konstantes Gleich- oder Wechselstromfeld entgegengerichtet wird, welches eine Durchwirbelung im Überzugsmaterial in diesem Bereich dämpft.

2. Vorrichtung zur Durchführung des Verfahrens nach Anspruch 1 mit beidseitig des Durchführungskanals im Überzugsmaterial Induktionsströme erzeugenden Drehstrom-Induktoren, die aus Eisenkernpaketen mit in quer zum Zuführkanal verlaufenden Nuten verlegten Wicklungen bestehen,
dadurch gekennzeichnet,
daß oberhalb der Induktoren (1, 2) im oberen behälternahen Bereich des Durchführungskanals (5) beidseitig je ein weiterer Eisenkern (3) angeordnet ist, der mit parallel zu den Induktor-Wicklungen (2) verlaufenden, mit Gleich- oder Wechselstrom beaufschlagbaren Wicklungen (4) bestückt ist.

3. Vorrichtung nach Anspruch 2,
dadurch gekennzeichnet,
daß die Eisenkerne (3) der mit Gleich- oder Wechselstrom beaufschlagbaren Wicklungen L-förmig gestaltet sind, wobei jeweils ein Schenkel stirnseitig an den Eisenkernen (1) der Induktoren anliegen und der jeweils andere Schenkel stirnseitig zum Durchführkanal (5) gerichtet ist.

4. Vorrichtung nach Anspruch 3,
dadurch gekennzeichnet,
daß die dem Durchführkanal (5) zugewandten Schenkel des L-förmigen Eisenkerns (3) in der Mitte weiter vom Durchführkanal (5) beabstandet sind, als an den Seiten.

5. Vorrichtung nach Anspruch 1,
dadurch gekennzeichnet,
daß der Behälter (B) und der Durchführkanal (5) für verschiedene schmelzflüssige Überzugsmaterialien auswechselbar sind.

## Claims

1. Process for coating the surface of strand-form material, in particular, non-ferrous metal and steel strip with a metallic layer in which the material is directed without reversal of direction through a container, which holds the molten coating-material and which has a through-channel, below the melt surface, in which currents are induced in the coating material concerned by means of a moving electromagnetic field, said currents gathering, in interaction with the moving electromagnetic field, an electromagnetic force to retain the coating material,
characterized in that
the moving field in the upper zone of the through-channel near to the container, has a constant direct-current field or alternating current field directed against it which damps turbulence in the coating material in this zone.

2. Device for effecting the process in accordance with claim 1, with rotary current inductors, producing induction currents in the coating material on both sides of the through-channel, which comprises iron core stacks with windings in grooves running transversely in relation to the input channel,
characterized in that
a further iron core (3) is disposed on both sides of a through-channel (5) above the inductors (1,2) in the upper zone of said through-channel near to the container, the said core (3) being fitted with windings (4) extending parallel to the inductor windings (2) which can have direct-current or alternating current applied to them.

3. Device in accordance with claim 2,
characterized in that
the iron cores (3) of the windings which can have direct or alternating current applied to them, are designed L-shaped, whereby one side-piece lies on a front face of the iron cores (1) of the inductors and the respective second side-piece is directed towards the front face of the through-channel (5).

4. Device in accordance with claim 3,
characterized in that
they side-pieces of the L-shaped iron core (3), which face the through-channel (5), are further separated, in their centre, from the through-channel (5) than at the sides.

5. Device in accordance with claim 1,
characterized in that
the container (B) and the through-channel (5) can be exchanged for different liquid, molten coating materials.

## Revendications

1. Procédé pour recouvrir d'un revêtement métallique la surface d'un produit allongé, en particulier un feuillard en métal non-ferreux et en acier, pour lequel le produit traverse, sans changement de direction, un récipient recevant le matériau de revêtement fondu et présentant au-dessous du niveau du bain de fusion un canal de passage, dans lequel sont induits des courants d'induction dans le matériau de revêtement par un champ électromagnétique d'ondes progressives, courants d'induction qui engendrent en interaction avec le champ électromagnétique d'ondes progressives une force électromagnétique pour retenir le matériau de revêtement,
caractérisé en ce qu'un champ de courant continu ou alternatif constant est engendré en sens contraire au champ d'ondes progressives, dans la zone supérieure proche du récipient du canal de passage, champ de courant continu ou alternatif qui amortit un tourbillonnement dans le matériau de revêtement dans cette zone.

2. Dispositif pour la mise en oeuvre du procédé selon la revendication 1, comportant des inducteurs à courant triphasé engendrant des courants d'induction des deux côtés du canal de passage dans le matériau de revêtement et constitués d'éléments à noyaux de fer comprenant des enroulements agencés dans des gorges s'étendant transversalement au canal d'amenée,
caractérisé en ce qu'au dessus des inducteurs (1,2), dans la zone supérieure proche du récipient du canal de passage (5), des deux côtés, est agencé à chaque fois un noyau de fer supplémentaire (3) qui est muni d'enroulements (4) s'étendant parallèlement aux enroulements de l'inducteur (2) et pouvant être alimentés en courant continu ou alternatif.

3. Dispositif selon la revendication 2,
caractérisé en ce que les noyaux de fer (3) des enroulements pouvant être alimentés en courant continu ou alternatif sont réalisés en forme de L, à chaque fois une branche reposant frontalement contre les noyaux de fer (1) des inducteurs et l'autre branche étant à chaque fois orientée frontalement vers le canal de passage (5).

4. Dispositif selon la revendication 3,
caractérisé en ce que les branches en regard du canal de passage (5) du noyau de fer (3) en forme de L sont plus écartées, du canal de passage (5), au centre qu'aux côtés.

5. Dispositif selon la revendication 1,
caractérisé en ce que le récipient (B) et le canal de passage (5) peuvent être échangés pour des matériaux de revêtement fondus différents.
